(19) **Europäisches Patentamt European Patent Office Office européen des brevets**

(11) **EP 1 514 901 B1**

(12) **EUROPEAN PATENT SPECIFICATION**

(45) Date of publication and mention of the grant of the patent:
**01.06.2011 Bulletin 2011/22**

(51) Int Cl.:
*C08L 9/06* *(2006.01)*  *C08L 65/00* *(2006.01)*
*C08L 57/00* *(2006.01)*  *B60C 1/00* *(2006.01)*

(21) Application number: **03733498.4**

(86) International application number:
**PCT/JP2003/007800**

(22) Date of filing: **19.06.2003**

(87) International publication number:
**WO 2004/000931 (31.12.2003 Gazette 2004/01)**

(54) **RUBBER COMPOSITION FOR TIRE AND TIRE MADE THEREFROM**

KAUSCTHUKZUSAMMENSETZUNG FÜR REIFEN UND DARAUS HERGESTELLTER REIFEN

COMPOSITION DE CAOUTCHOUC POUR PNEUMATIQUE ET PNEUMATIQUE A BASE DE CETTE COMPOSITION

(84) Designated Contracting States:
**DE ES FR GB IT**

(30) Priority: **19.06.2002 JP 2002178234**
**25.11.2002 JP 2002340383**

(43) Date of publication of application:
**16.03.2005 Bulletin 2005/11**

(73) Proprietor: **Bridgestone Corporation**
**Tokyo 104-8340 (JP)**

(72) Inventors:
• **NAKAGAWA, Ryuji,**
**c/o Bridgestone Corporation**
**Kodaira-shi,**
**Tokyo 187-8531 (JP)**
• **OTOYAMA, Norikazu,**
**c/o Bridgestone Corporation**
**Kodaira-shi,**
**Tokyo 187-8531 (JP)**
• **NOHARA, Daisuke,**
**c/o Bridgestone Corporation**
**Kodaira-shi,**
**Tokyo 187-8531 (JP)**

(74) Representative: **Whalley, Kevin**
**Marks & Clerk LLP**
**90 Long Acre**
**London WC2E 9RA (GB)**

(56) References cited:
EP-A1- 1 035 164  JP-A- 5 214 170
JP-A- 9 136 996  JP-A- 11 130 909
JP-A- 55 060 539  JP-A- 2000 129 037
JP-A- 2000 129 037  JP-A- 2002 155 165

**Description**

TECHNICAL FIELD

The present invention relates to a rubber composition for tires and a tire made therefrom. More particularly, the present invention relates to a rubber composition which, when the rubber composition is used for a tire, can exhibit an excellent road gripping property even when the temperature at the surface of the tread is low and a tire made by using the rubber composition.

BACKGROUND ART

An excellent road gripping property is required for the tread rubber of a tire for which driving at a high speed is required. To obtain the excellent road gripping property, heretofore, a method of using a styrene-butadiene copolymer rubber (SBR) having a great content of the styrene unit, a method of using a compounding system highly filled with softening agents and carbon black, or a method of using carbon black having a small particle size, has been conducted.
However, since SBR having a great content of the styrene unit has, in general, a high glass transition temperature, a problem arises in that dependence of the physical properties of the rubber composition on the temperature increases around the temperatures exhibited by the tire during the driving, and the change in the performance of the tire due to the change in the temperature increases.
When the amount of carbon black or softening agents is increased, or when carbon black having a small particle size is used, a problem arises in that dispersion of carbon black is adversely affected, and abrasion resistance decrease.
A rubber composition according to the preamble of claim 1 is known from JP2000129037.
The process oil may be replaced with the same amount of a resin having a high softening point. However, in the replacement in an excessively great amount, a drawback arises similarly to that described above in that the dependence of the properties on the temperature increases due to the effect of the resin having a high softening point.
Based on the above results, a method of using a mixture of a petroleum resin containing a $C_9$ aromatic resin as the main component and a coumarone-indene resin having a softening point lower than 40°C (for example, Japanese Patent Application Laid-Open No. Heisei 5(1993)-214170), a method of using carbon black having a small particle diameter in combination with an alkylphenol-based resin (for example, Japanese Patent Application Laid-Open No. Heisei 6(1994)-200078), and a method of mixing a copolymer resin of a $C_5$ fraction obtained by thermal cracking of naphtha and styrene or vinyltoluene with a diene-based rubber component (for example, Japanese Patent Application Laid-Open No. Heisei 9(1997)-328577), have been attempted in the systems using SBR having a great content of the styrene component as the rubber component. However, the effects of these methods are insufficient.
Other rubber compositions in which resins are incorporated to provide tackiness are known from EP-A-1035164, JP2002155165, JP11130909 AND JP5214170.

DISCLOSURE OF THE INVENTION

The present invention has an object of providing a rubber composition for tires which exhibits decreased dependence on the temperature, an excellent road gripping property and excellent processability in production plants and can be advantageously used for tire treads, and a tire using the rubber composition.
As the result of intensive studies by the present inventors, it was found that the object of the present invention could be achieved by the rubber composition and the tire described in the following. The present invention has been completed based on this knowledge. The present invention provides:

(1) A rubber composition for tires which comprises 100 parts by mass of (A) copolymer (a) which is a styrene-butadiene copolymer having a weight-average molecular weight of $4.0 \times 10^5$ to $3.0 \times 10^6$, as obtained in accordance with gel permeation chromatography and expressed as a value of corresponding polystyrene, a content of bound styrene St(a) of 10 to 50% by mass and a content of a vinyl unit in a butadiene portion of 20 to 70%; 10 to 200 parts by mass of (B) copolymer (b) which is a hydrogenated styrene-butadiene copolymer having a weight-average molecular weight of $5.0 \times 10^3$ to $2.0 \times 10^5$, as obtained in accordance with gel permeation chromatography and expressed as a value of corresponding polystyrene, a content of bound styrene St(b) which is in a range of 25 to 70% by mass and satisfies a relation expressed by equation (I) and a fraction of hydrogenated double bond in the butadiene portion of 60% or greater; and (C) at least one substance selected from C9-based petroleum resins modified with a compound selected from unsaturated alicyclic compounds, compounds having a hydroxyl group and unsaturated carboxylic acid compounds, providing tackiness to the rubber composition and liquid polymers having a weight-average molecular weight of 1,000 to 50,000, equation (I) being:

$$St(b) \geqq St(a) + 10 \qquad \cdots (I)$$

(2) A rubber composition for tires described in (1), wherein the content of bound styrene St(b) in component (B) is 30 to 60% by mass;

(3) A rubber composition for tires described in any one of (1) and (2), wherein the fraction of hydrogenated double bond in the butadiene portion is 80% or greater;

(4) A rubber composition for tires described in any one of (1) to (3), wherein an amount of component (B) is 20 to 100 parts by mass per 100 parts by mass of component (A);

(5) A rubber composition for tires described in any one of (1) to (4), wherein equation (I) is:

$$St(b) \geqq St(a) + 15 \qquad \cdots (I)$$

(6) A rubber composition for tires described in (1), wherein the $C_9$-based petroleum resin modified with a unsaturated alicyclic compound;

(7) A rubber composition for tires described in (6), wherein the unsaturated alicyclic compound is dicyclopentadiene;

(8) A rubber compositions for tires described in (1), wherein the $C_9$-based petroleum resin modified with a compound having hydroxyl group;

(9) A rubber composition for tires described in (8), wherein the compound having hydroxyl group is a phenol-based compound;

(10) A rubber composition for tires described in (1), wherein the $C_9$-based petroleum resin modified with an unsaturated carboxylic acid compound

(11) A rubber composition for tires described in (10), wherein the unsaturated carboxylic acid compound is maleic acid;

(12) A rubber composition for tires described in any one of (1) to (11), wherein the $C_9$-based petroleum resin has a softening point of 200°C or lower;

(13) A rubber composition for tires described in any one of (1) to (12), wherein an amount of component (C) is 10 to 150 parts by mass per 100 parts by mass of a rubber component;

(14) A rubber composition for tires described in any one of (1) to (13), which further comprises a filler;

(15) A rubber composition for tires described in (14), wherein the filler is at least one filler selected from carbon black, silica and inorganic compounds represented by following formula (II):

$$mM_1 \cdot xSiOy.zH_2O \qquad (II)$$

wherein $M_1$ represents at least one metal, metal oxide, metal hydroxide, hydrate of the metal, the metal oxide or the metal hydroxide or metal carbonate, the metal being selected from Al, Mg, Ti, Ca and Zr, and m, x, y and z represent an integer of 1 to 5, an integer of 0 to 10, an integer of 2 to 5 and an integer of 0 to 10, respectively; and (16) A tire which uses a rubber composition for tires described in any one of (1) to (15).

THE MOST PREFERRED EMBODIMENT TO CARRY OUT THE INVENTION

The rubber composition of the present invention comprises as the essential component thereof styrene-butadiene copolymer (a) which is a styrene-butadiene copolymer having a weight-average molecular weight of $4.0 \times 10^5$ to $3.0 \times 10^6$, as obtained in accordance with the gel permeation chromatography (GPC) and expressed as the value of corresponding polystyrene, a content of the bound styrene St(a) of 10 to 50% by mass and a content of the vinyl unit in the butadiene portion of 20 to 70%.

When the weight-average molecular weight of copolymer (a) is smaller than $4.0 \times 10^5$, the properties at break of the rubber composition decrease. When the weight-average molecular weight exceeds $3.0 \times 10^6$, viscosity of a polymer solution becomes excessively great, and productivity decreases. When the content of the bound styrene in copolymer (a) is smaller than 10% by mass, the properties at break decrease. When the content of the bound styrene exceeds 50% by mass, abrasion resistance decreases. When the content of the vinyl unit in the butadiene portion is smaller than 20%, the road gripping property decreases. When the content of the vinyl unit exceeds 70% by weight, abrasion resistance decreases. From the above standpoint, it is preferable that the content of the vinyl unit is in the range of 30 to 60%.

The rubber composition of the present invention further comprises as the essential component thereof styrene-butadiene copolymer (b) which is a hydrogenated styrene-butadiene copolymer having a weight-average molecular weight of $5.0\times10^3$ to $2.0\times10^5$, as obtained in accordance with GPC and expressed as the value of corresponding polystyrene, a content of the bound styrene St(b) which is in the range of 25 to 70% by mass and a fraction of hydrogenated double bond in the butadiene portion of 60% or greater.

When the weight-average molecular weight of copolymer (b) is outside the above range, the road gripping property on dry roads decreases. When the content of the bound styrene is smaller than 25%, the road gripping property on dry roads decreases. When the content of the bound styrene exceeds 70%, the composition becomes hard since the copolymer becomes resinous, and the road gripping property on dry roads decreases. When the fraction of the hydrogenated double bonds is not 60% or greater in the butadiene portion, co-crosslinking with copolymer (a) takes place, and the sufficient road gripping property cannot be obtained. From the above standpoint, it is preferable that the fraction of hydrogenated double bond in the butadiene portion is 80% or greater.

Copolymer (b) exhibits also the effect as the softening agent for rubber, and mixing of the rubber composition can be enabled without using an aromatic oil which is widely used as the softening agent for rubber. Copolymer (b) may be added during the mixing to form the rubber composition or to form a master batch, or may be added during the production of the rubber in a manner similar to the addition of an extending oil.

In the rubber composition of the present invention, it is necessary that component (B) is comprised in an amount of 10 to 200 parts by mass per 100 parts by mass of component (A). When the amount is less than 10 parts by mass, the improvements in the strength and the road gripping property on dry roads are insufficient. When the amount exceeds 200 parts by mass, the Mooney viscosity decreases, and productivity decreases. From the above standpoint, it is preferable that the amount of component (B) is in the range of 20 to 100 parts by mass per 100 parts by mass of component (A).

In the rubber composition of the present invention, it is essential that the content of the bound styrene St(a) in copolymer (a) and the content of the bound styrene St(b) in copolymer (b) satisfy the following equation (I):

$$St(b) \geqq St(a)+10 \qquad \cdots (I)$$

wherein St(a) represents the content of the bound styrene in copolymer (a), and St(b) represents the content of the bound styrene in copolymer (b).

Equation (I) shows the condition for compatibility of copolymer (a) and copolymer (b). When the difference in the contents of the bound styrene in copolymer (a) and in copolymer (b) is smaller than 10%, the sufficient compatibility cannot be obtained. As the result, bleeding of component (B) on the surface of rubber takes place. Therefore, when the rubber composition is used for forming a tire tread, sufficient adhesion to other members cannot be achieved, and the strength at break also decreases. The rubber composition exhibiting the excellent road gripping property on dry roads and strength can be obtained when the condition shown by equation (I) is satisfied. It is preferable that the difference in the contents of the bound styrene in copolymer (a) and in copolymer (b) is greater than 15%.

Copolymer (a) can be obtained by copolymerizing, for example, butadiene and styrene in accordance with the anionic polymerization using a lithium-based catalyst in a hydrocarbon solvent in the presence of an ether or a tertiary amine. The hydrocarbon solvent is not particularly limited. Alicyclic hydrocarbons such as cyclohexane and methylcyclopentane, aliphatic hydrocarbons such as pentane, hexane and heptane and aromatic hydrocarbons such as benzene and toluene can be used.

The lithium-based catalyst is not particularly limited and can be suitably selected from organolithium compounds, lithium amide and lithium amide tin. Organolithium compounds are preferable. Examples of the organolithium compound include alkyllithiums such as ethyllithium, propyllithium, n-butyllithium, sec-butyllithium and t-butyllithium, aryllithiums such as phenyllithium, alkenyllithiums such as vinyllithium, and alkylenedilithiums such as tetramethylenedilithium and pentamethylenedilithium.

Among these organolithium compounds, n-butyllithium, sec-butyllithium, t-butyllithium and tetramethylenedilithium are more preferable, and n-butyllithium is most preferable.

Copolymer (b), which is a hydrogenated styrene-butadiene copolymer, can be obtained by hydrogenating a polymer obtained in accordance with any one of the processes similar to those conducted for obtaining copolymer (a) in accordance with a conventional process. Examples of the catalyst for the hydrogenation include alumina, silica-alumina, platinum and palladium catalysts supported on active carbon or the like, nickel catalysts and cobalt-based catalysts supported on diatomaceous earth, alumina or the like, and Raney nickel. The hydrogenation is, in general, conducted under a hydrogen pressure of about 1 to 100 atm.

In the rubber composition of the present invention, it is essential that (C) at least one substance selected from resins providing tackiness to the rubber composition and liquid polymers having a weight-average molecular weight of 1,000 to 50,000 is added to copolymer (a) and copolymer (b).

The resin providing tackiness to the rubber composition means, in general, a thermoplastic resin which has a molecular weight in the range of several hundreds to several thousands and provides tackiness when the resin is mixed with natural rubber or synthetic rubbers.

Specifically, petroleum-based resins as described in (1) above are used.

The petroleum-based resin can be obtained by polymerizing a fraction of cracking oil in the presence of a Friedel-Crafts-type catalyst without separating the components. The fraction of cracking oil is formed as a byproduct in the thermal cracking of naphtha in the petrochemical industry in combination with basic materials of the petrochemical industry such as ethylene and propylene and contains unsaturated hydrocarbons such as olefins and diolefins,

Examples of the petroleum-based resin include aliphatic petroleum resins which are obtained by (co)polymerizing the $C_5$ fraction obtained by thermal cracking of naphtha, aromatic petroleum resins which are obtained by (co) polymerizing the $C_9$ fraction obtained by thermal cracking of naphtha, copolymer-based petroleum resins which are obtained by copolymerizing the $C_5$ fraction and the $C_9$ fraction described above, alicyclic compound-based petroleum resins such as hydrogenated petroleum resins and dicyclopentadiene-based petroleum resins, and styrene-based resins such as styrene, substituted styrenes and copolymers of styrene and substituted styrenes with other monomers.

The $C_5$ fraction obtained by thermal cracking of naphtha contains, in general, olefin-based hydrocarbons such as 1-pentene, 2-pentene, 2-methyl-1-butene, 2-methyl-2-butene and 3-methyl-1-butene and diolefin-based hydrocarbons such as 2-methyl-1,3-butadiene, 1,2-pentadiene, 1,3-pentadiene and 3-methyl-1,2-butadiene.

The aromatic petroleum resin obtained by (co)polymerizing the $C_9$ fraction is a resin obtained by polymerizing aromatic compounds having 9 carbon atoms in which vinyltoluene and indene are the main monomers. Examples of the $C_9$ fraction obtained by thermal cracking of naphtha include homologues of styrene such as α-methylstyrene, β-methylstyrene and γ-methylstyrene and homologues of indene such as indene and coumarone. Examples of the commercial product of the aromatic petroleum resin as shown by the trade name include PETROSIN manufactured by MITSUI SEKIYU KAGAKU Co., Ltd., PETRITE manufactured by MIKUNI KAGAKU Co., Ltd., NEOPOLYMER manufactured by NIPPON SEKIYU KAGAKU Co., Ltd., and PETCOAL manufactured by TOYO SODA Co., Ltd.

Modified petroleum resins obtained by modifying the petroleum resins derived from the $C_9$ fraction described above are used in the present invention as the resin enabling simultaneous exhibition of the excellent road gripping property and the excellent processability in production plants. The modified petroleum resin is selected from $C_9$-based petroleum resins modified with unsaturated alicyclic compounds, $C_9$-based petroleum resins modified with compounds having hydroxyl group and $C_9$-based petroleum resins modified with unsaturated carboxylic acid compounds.

Preferable examples of the unsaturated alicyclic compound include cyclopentadiene and methylcyclopentadiene. Examples of the product of the Diels-Alder reaction of alkylcyclopentadiene include dicyclopentadiene, the codimer of cyclopentadiene and methylcyclopentadiene and tricyclo-pentadiene.

As the unsaturated alicyclic compound used in the present invention, dicyclopentadiene is more preferable. The $C_9$-based petroleum resin modified with dicyclopentadiene can be obtained by thermal polymerization in the presence of both of dicyclopentadiene and the $C_9$ fraction.

Examples of the $C_9$-based petroleum resin modified with dicyclopentadiene include commercial products such as NEOPOLYMER-130S manufactured by SHIN NIPPON SEKIYU KAGAKU Co., Ltd.

Examples of the compound having hydroxyl group include alcohol compounds and phenol compounds. Examples of the alcohol compound include alcohol compounds having double bond such as allyl alcohol and 2-butene-1,4-diol.

As the phenol compound, phenol and alkylphenols such as cresol, xylenol, p-t-butylphenol, p-octylphenol and p-nonylphenol can be used. The compound having hydroxyl group may be used singly or in combination of two or more.

The $C_9$-based petroleum resin having hydroxyl group may also be produced in accordance with the process in which the ester group is introduced into a petroleum resin by thermal polymerization of an alkyl (meth)acrylate in combination with the petroleum fraction, and then the ester group is reduced, or in accordance with the process in which the double bond is allowed to remain in or introduced into a petroleum resin, and then the double bond is hydrated.

In the present invention, the resins obtained in accordance with various processes described above can be used as the $C_9$-based petroleum resin having hydroxyl group. Among these resins, the petroleum resins modified with phenol are preferable from the standpoint of the performance and the production process. The petroleum resins modified with phenol are obtained in accordance with the cationic polymerization of the $C_9$ fraction in the presence of phenol, can be easily modified and are inexpensive.

Examples of the $C_9$-based petroleum resin modified with phenol include commercial products such as NEOPOLYMER-E130 manufactured by SHIN NIPPON SEKIYU KAGAKU Co., Ltd.

The $C_9$-based petroleum resin modified with an unsaturated carboxylic acid which is used in the present invention can be obtained by modifying the $C_9$-based petroleum resin with an ethylenically unsaturated carboxylic acid. Examples of the ethylenically unsaturated carboxylic aid include maleic acid (anhydride), fumaric acid, itaconic acid, tetrahydrophthalic acid (anhydride), (meth)acrylic acid and citraconic acid. The $C_9$-based petroleum resin modified with an unsaturated carboxylic acid can be obtained by thermal polymerization of the $C_9$-based petroleum resin and the ethylenically unsaturated carboxylic acid.

In the present invention, the $C_9$-based petroleum resin modified with maleic acid is preferable.

Examples of the C$_9$-based petroleum resin modified with an unsaturated carboxylic acid include commercial products such as NEOPOLYMER-160 manufactured by SHIN NIPPON SEKIYU KAGAKU Co., Ltd.

In the present invention, copolymer resins of the C$_5$ fraction and C$_9$ fraction obtained by the thermal cracking of naphtha can be advantageously used. The C$_9$ fraction is not particularly limited. The C$_9$ fraction obtained by thermal cracking of naphtha is preferable. Examples of the C$_9$ fraction described above include commercial products such as TS30, TS30-DL, TS35 and TS35-DL of the STRUKTOL series manufactured by SCHILL & SEILACHER Company.

Examples of the phenol-based resin described above include alkylphenol-formaldehyde-based resins, modified resins thereof with rosin, alkylphenol-acetylene-based resins, modified alkylphenol resins and terpene-phenol resins. Specific examples include commercial products (shown by the trade names) such as HITANOL 1502 (manufactured by HITACHI KASEI Co., Ltd.) which is a novolak-type alkylphenol resin and KORESIN (manufactured by BASF Company) which is a p-t-butylphenol-acetylene resin.

Examples of the coal-based resin include coumarone-indene resins. Examples of the xylene-based resin include xylene-formaldehyde resins. Polybutene can also be used as the resin providing the tackiness.

Among these synthetic resins, the copolymer resins of the C$_5$ fraction and the C$_9$ fraction, aromatic petroleum resins obtained by (co)polymerization of the C$_9$ fraction, phenol-based resins and the coumarone-indene resins are preferable.

It is preferable that the resin of component (C) has a softening point of 200°C or lower, more preferably in the range of 80 to 150°C as measured in accordance with the method of ASTM E28-58-T. When the softening point is higher than 200°C, occasionally, the temperature dependence of the hysteresis loss property is great, and the processability decreases. When the softening point is lower than 80°C, the road gripping property is occasionally poor. From the above standpoint, it is most preferable that the softening point is in the range of 90 to 120°C.

As component (C) described above, a liquid polymer having a weight-average molecular weight of 1,000 to 50,000 can also be used. The liquid polymer means a polymer which is fluid at the room temperature. The structure of the liquid polymer is not particularly limited as long as the weight-average molecular weight is within the above range. Examples of the liquid polymer include chloroprene rubber (CR), styrene-butadiene rubber (SBR), butadiene rubber (BR), isoprene rubber (IR) ,styrene-isoprene rubber (SIR) and polyisobutylene.

Among these liquid polymers, copolymers of styrene and butadiene having a relatively low molecular weight are preferable. For example, styrene-butadiene copolymers having a weight-average molecular weight of about 5,000 to 10,000 expressed as the molecular weight of the corresponding polystyrene can be advantageously used.

Examples of the liquid polymer include the following commercial products: R-15HT and R-45HT (trade names) which are polybutadiene having hydroxyl groups at the ends of the molecule (manufactured by IDEMITSU SEKIYU KAGAKU Co., Ltd.); G-1000, G-2000 and G-3000 (trade names) which are polybutadiene having hydroxyl groups at the ends of the molecule, C-1000 (a trade name) which is polybutadiene having carboxyl groups at the ends of the molecule, B-1000, B-2000 and B-3000 (trade names) which are simple polybutadiene, GI-1000, GI-2000 and GI-3000 (trade names) which are hydrogenated polybutadiene having hydroxyl groups at the ends of the molecule, CI-1000 (a trade name) which is hydrogenated polybutadiene having carboxyl groups at the ends of the molecule, and BI-1000, BI-2000 and BI-3000 (trade names) which are hydrogenated polybutadiene (the above polymers manufactured by NIPPON SODA Co., Ltd.); LIR-30 and LIR-50 (trade names) which are polyisoprene, LIR-300 (a trade name) which is polybutadiene, LIR-310 (a trade name) which is a styrene-isoprene copolymer, LIR-390 (a trade name) which is a butadiene-isoprene copolymer, LIR-200 and LIR-290 (trade names) which are hydrogenated polyisoprene, LIR-403 (a trade name) which is polybutadiene modified with maleic anhydride, and LIR-410 (a trade name) which is polybutadiene modified with maleic acid (the above polymers manufactured by KURARAY Co., Ltd.); and RICON 130MA8, 130MA13, 130MA20, 131MA5, 131MA10, 131MA17, 131MA20, 156MA17 and 184MA6 (trade names) which are polybutadiene modified with maleic acid, RICON 130, 131, 134, 142, 150, 152, 153, 154, 156 and 157 (trade names) which are polybutadiene, and RICON 100, 181 and 184 (trade names) which are styrene-butadiene copolymers (the above polymers manufactured by SERTOMER Company).

Various liquid polymers can be synthesized and used as the liquid polymer preferable as component (C) of the present invention. For example, styrene-butadiene rubber (SBR) having a content of the bound styrene of 26% by mass in the molecule, a content of the vinyl unit of 53% in the butadiene portion and a weight-average molecular weight of 9,300 is preferable. The above SBR can be synthesized by adding 5 g of styrene and 15 g of butadiene to 700 ml of cyclohexane as the solvent and using 3.2 mmole of n-butyllithium as the initiator, 1 mmole of, for example, 2,2-bis(2-tetrahydrofuryl)propane as the randomizer, isopropanol as the agent for terminating the polymerization and 2,6-di-t-butyl-p-cresol (BHT) as the antioxidant.

It is preferable that the resin or the liquid polymer of component (C) is used in an amount of 10 to 150 parts by mass per 100 parts by mass of the rubber component comprising copolymers (a) and (b). When the amount is 10 parts by mass or more, the effect of adding component (C) is sufficiently exhibited. When the amount is 100 parts by mass or less, component (C) does not adversely affect the processability or the abrasion resistance. It is more preferable that the amount of component (C) is in the range of 20 to 80 parts by mass.

It is preferable that the rubber composition of the present invention comprises a filler. As the filler, any filler which can be used for conventional rubber compositions can be used. Examples of the filler include carbon black and inorganic fillers. As the inorganic filler, silica and fillers represented by the following formula (II) are preferable.

$$mM_1 \cdot xSiOy.zH_2O \qquad (II)$$

wherein $M_1$ represents at least one metal, metal oxide, metal hydroxide, hydrate of the metal or metal carbonate, the metal being selected from Al, Mg, Ti, Ca and Zr, and m, x, y and z represent an integer of 1 to 5, an integer of 0 to 10, an integer of 2 to 5 and an integer of 0 to 10, respectively.

The filler may further comprise metals such as potassium, sodium, iron and magnesium, elements such as fluorine and groups such as $NH_4$-.

Examples of the inorganic filler include alumina hydrate ($Al_2O_3 \cdot H_2O$), aluminum hydroxide [$Al(OH)_3$] such as gibbsite and bayerite, aluminum carbonate [$Al_2(CO_3)_2$], magnesium hydroxide ($Mg(OH)_2$), magnesium oxide (MgO), magnesium carbonate [$MgCO_3$], talc ($3MgO \cdot 4SiO_2.H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophillite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$ and the like), magnesium silicate ($Mg_2SiO_4$, $MgSiO_3$ and the like), calcium silicate ($Ca_2SiO_4$ and the like), aluminum calcium silicate ($Al_2O_3 \cdot CaO \cdot 2SiO_2$ and the like), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], various types of zeolite, feldspar, mica and montmorillonite. In general formula (II) representing the inorganic filler, it is preferable that $M^1$ represents aluminum.

Among the above inorganic fillers, at least one filler selected from carbon black, silica, various types of alumina and various types of clay is preferable as the filler used in the present invention.

Carbon black is not particularly limited. For example, SRF, GPF, FEF, HAF, ISAF and SAF can be used. Carbon black having an iodine adsorption (IA) of 60 mg/g or greater and a dibutyl phthalate absorption (DBP) of 80 ml/100 g or greater is preferable. The effect of improving the road gripping property and the fracture resistance is increased by using carbon black. HAF, ISAF and SAF providing excellent abrasion resistance are more preferable.

Among these types of carbon black, carbon black having an outer surface area in the range of 130 to 200 $m^2$/g as measured in accordance with the CTAB adsorption method is preferable.

Silica is not particularly limited. Examples of silica include wet silica (hydrated silicic acid), dry silica (anhydrous silicic acid), calcium silicate and aluminum silicate. Among these types of silica, wet silica which most remarkably exhibits the effect of improving the fracture resistance and simultaneously improving the road gripping property on wet roads and the low rolling resistance is more preferable.

It is preferable that the silica has a specific surface area in the range of 80 to 300 $m^2$/g and more preferably in the range of 10 to 220 $m^2$/g as measured in accordance with the nitrogen adsorption method. When the specific surface area is 80 $m^2$/g or greater, the sufficient reinforcing effect is exhibited. When the surface area is 300 $m^2$/g or smaller, no adverse effects on the processability are exhibited. In general, anhydrous silicic acid or hydrated silicic acid in the form of fine powder which is used as the white reinforcing filler of rubber is used. Examples of the silica include commercial products such as "NIPSIL" (manufactured by NIPPON SILICA KOGYO Co., Ltd.) having a specific surface area of about 200 $m^2$/g and "ZEOSIL 1115MP" (manufactured by RHODIA Company) having a specific surface area of 117 $m^2$/g.

The above alumina is, among the inorganic fillers represented by formula (II), alumina represented by the following general formula:

$$Al_2O_3 \cdot nH_2O$$

wherein n represents a number of 0 to 3.

It is preferable that the inorganic filler has a diameter of 10 $\mu$m or smaller and more preferably 3 $\mu$m or smaller. When the diameter of the inorganic filler is 10 $\mu$m or smaller, the fracture resistance and the abrasion resistance of the vulcanized rubber composition can be kept excellent.

In the present invention, the inorganic filler may be used singly or in combination of two or more. The filler is used in an amount in the range of 10 to 250 parts by mass per 100 parts by mass of the rubber component. From the standpoint of the reinforcing property and the effect of improving various physical properties, it is preferable that the amount is in the range of 20 to 150 parts by mass. When the amount is less than 10 parts by mass, the effect of improving the fracture resistance is not sufficient. When the amount exceeds 250 parts by mass, the processability of the rubber composition tends to become poor.

Where desired, the rubber composition of the present invention may be blended with natural rubber and/or other synthetic rubbers, and may comprise various chemicals conventionally used in the rubber industry such as process oils, antioxidants, vulcanizing agents, vulcanization auxiliary agents, vulcanization accelerators and scorch inhibitors.

The rubber composition of the present invention is used advantageously, in particular, for tires used for driving at high speeds.

The present invention will be described more specifically with reference to examples in the following. However, the present invention is not limited to the examples.

The evaluation of a rubber composition was conducted in accordance with the following methods.

(1) Weight-average molecular weight

Using monodisperse polymers of styrene manufactured by WATERS Company, the relation between the molecular weight of the monodisperse polymer of styrene at the peak and the count number was obtained in accordance with the gel permeation chromatography (GPC), and a calibration curve was obtained in advance. The molecular weight of a polymer expressed as the molecular weight of the corresponding polystyrene was obtained based on the obtained calibration curve.

(2) Microstructure

The microstructure of the butadiene portion of a polymer was obtained in accordance with the infrared spectroscopy. The content of the styrene unit in a polymer was calculated from the ratio of integrals in the $^1$H-NMR (the proton NMR) spectrum.

(3) Processability in production plants

The adhesion of a rubber containing a resin to a metal mixer and metal rolls during the mixing was evaluated, and the result of the evaluation is expressed by one of the following grades:

good, good to fair, fair, fair to poor, poor

(4) Hysteresis loss property

Using a vulcanizate obtained by vulcanizing a rubber composition prepared based on the formulation of each Example, tan δ at 50°C was measured under a dynamic strain of 1% using a tester for measuring the viscoelasticity manufactured by RHEOMETRICS Company. The result is expressed as an index based on the value of the control, which is set at 100%.

(5) Road gripping property

The road gripping property of a tire was evaluated by driving a vehicle having the tire on the road in a circuit. The time required for one lap of the circuit was measured from the tenth lap to the twentieth lap, and the road gripping property was evaluated based on the inverse of the average of the obtained values. The result is expressed as an index based on the value of the control, which is set at 100%. The greater the index, the better the road gripping property. The road gripping property on dry roads was evaluated when the road was in the dry condition, and the road gripping property on wet roads was evaluated when the road was in the wet condition.

Example 1

Copolymer (a) of component (A) which is a styrene-butadiene copolymer having a weight-average molecular weight of $1.0 \times 10^6$ as obtained in accordance with GPC and expressed as the value of the corresponding polystyrene, a content of the bound styrene of 30% by mass and a content of the vinyl unit in the butadiene portion of 50% in an amount of 100 parts by mass, 40 parts by mass of copolymer (b) of component (B) which is a liquid hydrogenated styrene-butadiene copolymer having a weight-average molecular weight of $1.0 \times 10^4$ as obtained in accordance with GPC and expressed as the value of the corresponding polystyrene, a content of the bound styrene of 40% by mass and a fraction of hydrogenated double bond in the butadiene portion of 90%, 40 parts by mass of (C) a copolymer-based petroleum resin obtained by copolymerization of the $C_5$ fraction and the $C_9$ fraction (manufactured by SCHILL & SEILACHER Company; "STRUKTOL TS30), 80 parts by mass of carbon black A (the outer surface area in accordance with the CTAB adsorption method: 148 m$^2$/g; the 24M4 DBP absorption: 102 ml/100g), 2 parts by mass of stearic acid, 3 parts by mass of zinc oxide, 1 part by mass of an antioxidant (N-1,3-dimethylbutyl-N'-phenyl-p-phenylenediamine), 0.4 parts by mass and 1 part by mass of two vulcanization accelerators which are 1,3-diphenylguanidine and dibenzothiazyl disulfide, respectively, and 1.5 parts by mass of sulfur were mixed together, and a rubber composition was prepared.

The hysteresis loss property of the prepared rubber composition was evaluated in accordance with the above method.

A tire having a size of 315/40R was prepared using the above rubber composition as the tread rubber, and the road gripping property was evaluated on dry roads and on wet roads.

The results of the evaluations are shown in Table 1. The results are expressed as indices based on the results of Comparative Example 1, which are set at 100.

Comparative Example 1

A rubber composition was prepared in accordance with the same procedures as those conducted in Example 1 except that an aromatic oil having the property as the softening agent (manufactured by FUJI KOSAN Co., Ltd,; "AROMACS #3") was used in place of the copolymer-based petroleum resin of component (C) obtained by copolymerization of the $C_5$ fraction and the $C_9$ fraction.

Comparative Example 2

A rubber composition was prepared in accordance with the same procedures as those conducted in Example 1 except that an aromatic oil having the property as the softening agent (manufactured by FUJI KOSAN Co., Ltd,; "AROMACS #3") was used in place of copolymer (b) and the copolymer-based petroleum resin of component (C) obtained by copolymerization of the $C_5$ fraction and the $C_9$ fraction. Using the result obtained here as the control, the effect of the combination of copolymer (b) and the resin of component (C) was examined. The result of the evaluation is shown in Table 1.

Examples 2 to 7 (according to invention), 8 and 9 (not according to invention).

Rubber compositions were prepared in accordance with the same procedures as those conducted in Example 1 except that the resins providing tackiness shown in Table 1 were used as component (C). The results of the evaluations are shown in Table 1. The results are expressed as indices based on the results of Comparative Example 1.

Examples 10 to 15

Rubber compositions were prepared in accordance with the same procedures as those conducted in Example 1 except that the resins providing tackiness shown in Table 1 were used as component (C). The results of the evaluations are shown in Table 1. The results are expressed as indices based on the results of Comparative Example 1.

Table 1 - 1

| Example | 1 | | | 2 | 3 | 4 |
| --- | --- | --- | --- | --- | --- | --- |
| Comparative Example | | 1 | 2 | | | |
| Component (A): SBR [*1] (part by mass) | 100 | 100 | 100 | 100 | 100 | 100 |
| Component (B): hydrogenated SBR[*2] (part by mass) | 40 | 40 | - | 40 | 40 | 40 |
| Component (C): resin providing tackiness (part by mass) | | | | | | |
| $C_5/C_9$ copolymer resin [*3] | 40 | - | - | - | - | - |
| phenol resin A [*4] | - | - | - | 40 | - | - |
| phenol resin B [*5] | - | - | - | - | 40 | - |
| DCPD resin [*6] | - | - | - | - | - | 40 |
| $C_5$-based resin [*7] | - | - | - | - | - | - |
| $C_9$-based aromatic resin A [*8] | - | - | - | - | - | - |
| $C_9$-based aromatic resin B [*9] | - | - | - | - | - | - |
| coumarone-indene resin A [*10] | - | - | - | - | - | - |
| coumarone-indene resin B[*11] | - | - | - | - | - | - |
| Aromatic oil[*18] (part by mass) | - | 40 | 80 | - | - | - |
| Carbon black A [*19] (part by mass) | 80 | 80 | 80 | 80 | 80 | 80 |
| Stearic acid (part by mass) | 2 | 2 | 2 | 2 | 2 | 2 |
| Zinc oxide (part by mass) | 3 | 3 | 3 | 3 | 3 | 3 |
| Antioxidant [*20] (part by mass) | 1 | 1 | 1 | 1 | 1 | 1 |

(continued)

| Example | 1 | | | 2 | 3 | 4 |
|---|---|---|---|---|---|---|
| Comparative Example | | 1 | 2 | | | |
| Vulcanization accelerator A [21] (part by mass) | 0.4 | 0.4 | 0.4 | 0.4 | 0.4 | 0.4 |
| Vulcanization accelerator B [22] (part by mass) 1 | 1 | 1 | 1 | 1 | 1 | 1 |
| Sulfur (part by mass) | 1.5 | 1.5 | 1.5 | 1.5 | 1.5 | 1.5 |
| Hysteresis loss | 120 | 100 | 87 | 118 | 113 | 113 |
| Road gripping property on dry roads | 115 | 100 | 90 | 112 | 109 | 108 |
| Road gripping property on wet roads | 109 | 100 | 98 | 106 | 105 | 104 |

Table 1 - 2

| Example | 5 | 6 | 7 | 8 | 9 |
|---|---|---|---|---|---|
| Comparative Example | | | | | |
| Component (A): SBR [1] (part by mass) | 100 | 100 | 100 | 100 | 100 |
| Component (B): hydrogenated SBR [2] (part by mass) | 40 | 40 | 40 | 40 | 40 |
| Component (C): resin providing tackiness (part by mass) | | | | | |
| $C_5/C_9$ copolymer resin [3] | - | - | - | - | - |
| phenol resin A [4] | - | - | - | - | - |
| phenol resin B [5] | - | - | - | - | - |
| DCPD resin [6] | - | - | - | - | - |
| $C_6$-based resin [7] | 40 | - | - | - | - |
| $C_9$-based aromatic resin A [8] | - | 40 | - | - | - |
| $C_9$-based aromatic resin B [9] | - | - | 40 | - | - |
| coumarone-indene resin A [10] | - | - | - | 40* | - |
| coumarone-indene resin B [11] | | - | - | - | 40* |
| Aromatic oil [18] (part by mass) | - | - | - | - | - |
| Carbon black A [19] (part by mass) | 80 | 80 | 80 | 80 | 80 |
| Stearic acid (part by mass) | 2 | 2 | 2 | 2 | 2 |
| Zinc oxide (part by mass) | 3 | 3 | 3 | 3 | 3 |
| Antioxidant [20] (part by mass) | 1 | 1 | 1 | 1 | 1 |
| Vulcanization accelerator A [21] (part by mass) | 0.4 | 0.4 | 0.4 | 0.4 | 0.4 |
| Vulcanization accelerator B [22] (part by mass) | 1 | 1 | 1 | 1 | 1 |
| Sulfur (part by mass) | 1.5 | 1.5 | 1.5 | 1.5 | 1.5 |
| Hysteresis loss | 116 | 121 | 119 | 118 | 119 |
| Road gripping property on dry roads | 111 | 114 | 113 | 113 | 114 |
| Road gripping property on wet roads | 106 | 111 | 109 | 105 | 107 |

* Not according to invention.

Table 1 - 3

| Example | 10 | 11 | 12 | 13 | 14 | 15 |
|---|---|---|---|---|---|---|
| Comparative Example | | | | | | |
| Component (A): SBR [1] (part by mass) | 100 | 100 | 100 | 100 | 100 | 100 |
| Component (B): hydrogenated SBR [2] (part by mass) | 40 | 40 | 40 | 40 | 40 | 40 |
| Component (C): liquid polymer (part by mass) | | | | | | |
| polybutadiene A [12] | 40 | - | - | - | - | - |
| polybutadiene B [13] | - | 40 | - | - | - | - |
| polybutadiene C [14] | - | - | 40 | - | - | - |

(continued)

| Example | 10 | 11 | 12 | 13 | 14 | 15 |
|---|---|---|---|---|---|---|
| Comparative Example | | | | | | |
| polyisoprene [*15] | - | - | - | 40 | - | |
| styrene-isoprene copolymer [*16] | - | - | - | - | 40 | - |
| styrene-butadiene copolymer [*17] | - | - | - | - | - | 40 |
| Aromatic oil [*18] (part by mass) | - | - | - | - | - | - |
| Carbon black A [*19] (part by mass) | 80 | 80 | 80 | 80 | 80 | 80 |
| Stearic acid (part by mass) | 2 | 2 | 2 | 2 | 2 | 2 |
| Zinc oxide (part by mass) | 3 | 3 | 3 | 3 | 3 | 3 |
| Antioxidant [*20] (part by mass) | 1 | 1 | 1 | 1 | 1 | 1 |
| Vulcanization accelerator A [*21] (part by mass) | 0.4 | 0.4 | 0.4 | 0.4 | 0.4 | 0.4 |
| Vulcanization accelerator B [*22] (part by mass) | 1 | 1 | 1 | 1 | 1 | 1 |
| Sulfur (part by mass) | 1.5 | 1.5 | 1.5 | 1.5 | 1.5 | 1.5 |
| Hysteresis loss | 108 | 107 | 106 | 105 | 113 | 115 |
| Road gripping property on dry roads | 107 | 106 | 105 | 103 | 108 | 112 |
| Road gripping property on wet roads | 103 | 103 | 102 | 102 | 104 | 109 |

[*1]: A styrene-butadiene copolymer having a weight-average molecular weight of $1.0 \times 10^6$ as expressed by the molecular weight of the corresponding polystyrene, a content of the bound styrene of 30% by mass and a content of the vinyl unit in the butadiene portion of 50% by mass.

[*2]: A hydrogenated liquid styrene-butadiene copolymer having a weight-average molecular weight of $1.0 \times 10^4$ as expressed by the molecular weight of the corresponding polystyrene, a content of the bound styrene of 40% by mass and a fraction of hydrogenated double bond in the butadiene portion of 90%. The weight-average molecular weight is expressed as the molecular weight of the corresponding polystyrene.

[*3]: "STRUKTOL TS30"; manufactured by SCHILL & SEILACHER Company.

[*4]: "KORESIN"; manufactured by BASF Company.

[*5]: "HITANOL 1502"; a novolak type alkylphenol resin; manufactured by HITACHI KASEI KOGYO Co., Ltd.

[*6]: "ESCOREZ 8180"; a dicyclopentadiene-based resin; manufactured by EXXON CHEMICAL Company.

[*7]: "HI-REZ T500X"; manufactured by MITSUI KAGAKU Co., Ltd.

[*8]: "FTR0120"; manufactured by MITSUI KAGAKU Co., Ltd.

[*9]: "NEOPOLYMER 140"; manufactured by SHIN NIPPON SEKIYU KAGAKU Co., Ltd.

[*10]: "ESCURON V120"; manufactured by SHIN NITTETSU KAGAKU Co., Ltd.

[*11]: "ESCURON L-20"; manufactured by OUCHI SHINKO KAGAKU KOGYO Co., Ltd.

[*12]: "R-45HT"; manufactured by IDEMITSU SEKIYU KAGAKU Co., Ltd.

[*13]: "G-2000"; manufactured by NIPPON SODA Co., Ltd.

[*14]: "RICON 153"; manufactured by SERTOMER Company.

[*15]: "LIR-50"; manufactured by KURARAY Co., Ltd.

[*16]: "LIR-310"; manufactured by KURARAY Co., Ltd.

[*17]: "RICON 100"; manufactured by SERTOMER Company.

[*18]: "AROMACS #3"; manufactured by FUJI KOSAN Co., Ltd.

[*19]: The outer surface area in accordance with the CTAB adsorption method: 148 $m^2$/g; 24M4 DBP absorption: 102 ml/100 g.

[*20]: N-1,3-Dimethylbutyl-N-phenyl-p-phenylenediamine.

[*21]: 1,3-Diphenylguanidine.

[*22]: Dibenzothiazyl disulfide.

Example 16

A rubber composition was prepared in accordance with the same procedures as those conducted in Example 1, and the hysteresis loss property, the road gripping property on dry roads and the road gripping property on wet roads were evaluated. The results of the evaluations are expressed as indices based on the results of Comparative Example 4. The results are shown in Table 2.

Example 17

A rubber composition was prepared in accordance with the same procedures as those conducted in Example 2, and the hysteresis loss property, the road gripping property on dry roads and the road gripping property on wet roads were evaluated. The results of the evaluations are expressed as indices based on the results of Comparative Example 5. The results are shown in Table 2.

Example 18

A rubber composition was prepared in accordance with the same procedures as those conducted in Example 2 except that carbon black B (the outer surface area in accordance with the CTAB adsorption method: 140 m$^2$/g; the 24M4 DBP absorption: 95 ml/100g) was used in place of carbon black A, and the hysteresis loss property, the road gripping property on dry roads and the road gripping property on wet roads were evaluated. The results of the evaluations are expressed as indices based on the results of Comparative Example 6. The results are shown in Table 2.

Example 19

A rubber composition was prepared in accordance with the same procedures as those conducted in Example 7, and the hysteresis loss property, the road gripping property on dry roads and the road gripping property on wet roads were evaluated. The results of the evaluations are expressed as indices based on the results of Comparative Example 7. The results are shown in Table 2.

Example 20 (not according to invention)

A rubber composition was prepared in accordance with the same procedures as those conducted in Example 8, and the hysteresis loss property, the road gripping property on dry roads and the road gripping property on wet roads were evaluated. The results of the evaluations are expressed as indices based on the results of Comparative Example 8. The results are shown in Table 2.

Example 21

A rubber composition was prepared in accordance with the same procedures as those conducted in Example 11, and the hysteresis loss property, the road gripping property on dry roads and the road gripping property on wet roads were evaluated. The results of the evaluations are expressed as indices based on the results of Comparative Example 9. The results are shown in Table 2.

Example 23

A rubber composition was prepared in accordance with the same procedures as those conducted in Example 12 except that carbon black B was used in place of carbon black A, and the hysteresis loss property, the road gripping property on dry roads and the road gripping property on wet roads were evaluated. The results of the evaluations are expressed as indices based on the results of Comparative Example 11. The results are shown in Table 2.

Example 24

A rubber composition was prepared in accordance with the same procedures as those conducted in Example 15, and the hysteresis loss property, the road gripping property on dry roads and the road gripping property on wet roads were evaluated. The results of the evaluations are expressed as indices based on the results of Comparative Example 12. The results are shown in Table 2.

Comparative Example 3

A rubber composition was prepared in accordance with the same procedures as those conducted in Comparative Example 2, and the effect of the combination of copolymer (b) and the resin of component (C) was examined based on the result of Comparative Example 4 used as the control.
The results of the evaluations are shown in Table 2.

Comparative Examples 4 to 12

Rubber compositions were prepared in Comparative Examples 4 to
12 in accordance with the same procedures as those conducted in Examples 16 to 24, respectively, except that an aromatic oil having the property as the softening agent (manufactured by FUJI KOSAN Co., Ltd,; "AROMACS #3") was used in place of copolymer (b), and the hysteresis loss property, the road gripping property on dry roads and the road gripping property on wet roads were evaluated. The results of the evaluations are shown in Table 2.

Table 2 -1

| Example Comparative Example | 16 | 17 | 18 | 19 | 20* |
|---|---|---|---|---|---|
| Component (A): SBR [*1] (part by mass) | 100 | 100 | 100 | 100 | 100 |
| Component (B): Hydrogenated SBR [*2] (part by mass) | 40 | 40 | 40 | 40 | 40 |
| Component (C): resin providing tackiness (part by mass) | | | | | |
| $C_5/C_9$ copolymer resin[*3] | 40 | - | - | - | - |
| phenol resin A [*4] | - | 40 | 40 | - | - |
| $C_9$-based aromatic resin B [*9] | - | - | - | 40 | - |
| coumarone indene rasin A [*10] | - | - | - | - | 40* |
| Aromatic oil [*18] (part by mass) | - | - | - | - | - |
| Carbon black A [*19] (part by mass) | 80 | 80 | - | 80 | 80 |
| Carbon black B [*23] (part by mass) | - | - | 80 | - | - |
| Stearic acid (part by mass) | 2 | 2 | 2 | 2 | 2 |
| Zinc oxide (part by mass) | 3 | 3 | 3 | 3 | 3 |
| Antioxidant [*20] (part by mass) | 1 | 1 | 1 | 1 | 1 |
| Vulcanization accelerator A[*21] (part by mass) | 0.4 | 0.4 | 0.4 | 0.4 | 0.4 |
| Vulcanization accelerators B [*22] (part by mass) | 1 | 1 | 1 | 1 | 1 |
| Sulfur (part by mass) | 1.5 | 1.5 | 1.5 | 1.5 | 1.5 |
| Hysteresis loss | 119 | 116 | 116 | 113 | 112 |
| Road gripping property on dry roads | 114 | 113 | 113 | 110 | 110 |
| Road gripping property on wet roads | 106 | 105 | 105 | 104 | 105 |

* Not according to invention

Table 2 - 2

| Example Comparative Example | 3 | 4 | 5 | 6 | 7 | 8 |
|---|---|---|---|---|---|---|
| Component (A): SBR[*1] (part by mass) | 100 | 100 | 100 | 100 | 100 | 100 |
| Component (B): hydrogenated SBR [*2] (part by mass) | - | - | - | - | - | - |
| Component (C): resin providing tackiness (part by mass) | | | | | | |
| $C_5/C_9$ copolymer resin [*3] | - | 40 | - | - | - | - |
| phenol resin A [*4] | - | - | 40 | 40 | - | - |
| $C_9$-based aromatic resin B[*9] | - | - | - | - | 40 | - |
| coumarone-indene resin A [*10] | - | - | - | - | - | 40 |
| Aromatic oil[*18] (part by mass) | 80 | 40 | 40 | 40 | 40 | 40 |
| Carbon black A [*19] (part by mass) | 80 | 80 | 80 | - | 80 | 80 |
| Carbon black B [*23] (part by mass) | - | - | - | 80 | - | - |
| Stearic acid (part by mass) | 2 | 2 | 2 | 2 | 2 | 2 |
| Zinc oxide (part by mass) | 3 | 3 | 3 | 3 | 3 | 3 |
| Antioxidant [*20] (part by mass) | 1 | 1 | 1 | 1 | 1 | 1 |
| Vulcanization accelerator A [*21] (part by mass) | 0.4 | 0.4 | 0.4 | 0.4 | 0.4 | 0.4 |

(continued)

| Example<br>Comparative Example | 3 | 4 | 5 | 6 | 7 | 8 |
|---|---|---|---|---|---|---|
| Vulcanization accelerator B[*22] (part by mass) | 1 | 1 | 1 | 1 | 1 | 1 |
| Sulfur (part by mass) | 1.5 | 1.5 | 1.5 | 1.5 | 1.5 | 1.5 |
| Hysteresis loss | 86 | 100 | 100 | 100 | 100 | 100 |
| Road gripping property on dry roads | 89 | 100 | 100 | 100 | 100 | 100 |
| Road gripping property on wet roads | 95 | 100 | 100 | 100 | 100 | 100 |

Table 2 - 3

| Example<br>Comparative Example | 21 | 22 | 23 | 24 |
|---|---|---|---|---|
| Component (A): SBR [*1] (part by mass) | 100 | 100 | 100 | 100 |
| Component (B): hydrogenated SBR[*2] (part by mass) | 40 | 40 | 40 | 40 |
| Component (C): liquid polymer (part by mass) | | | | |
| polybutadiene B [*13] | 40 | - | - | - |
| polybutadiene C [*14] | - | 40 | 40 | - |
| styrene -butadiene copolymer[*17] | - | - | - | 40 |
| Aromatic oil [*18] (part by mass) | - | - | - | - |
| Carbon black A [*19] (part by mass) | 80 | 80 | - | 80 |
| Carbon black B[*23] (part by mass) | - | - | 80 | - |
| Stearic acid (part by mass) | 2 | 2 | 2 | 2 |
| Zinc oxide (part by mass) | 3 | 3 | 3 | 3 |
| Antioxidant [*20] (part by mass) | 1 | 1 | 1 | 1 |
| Vulcanization accelerator A [*21] (part by mass) | 0.4 | 0.4 | 0.4 | 0.4 |
| Vulcanization accelerator B[*22] (part by mass) | 1 | 1 | 1 | 1 |
| Sulfur (part by mass) | 1.5 | 1.5 | 1.5 | 1.5 |
| Hysteresis loss | 115 | 116 | 115 | 118 |
| Road gripping property on dry roads | 112 | 113 | 113 | 115 |
| Road gripping property on wet roads | 108 | 109 | 108 | 110 |

Table 2 - 4

| Example<br>Comparative Example | 9 | 10 | 11 | 12 |
|---|---|---|---|---|
| Component (A): SBR [*1] (part by mass) | 100 | 100 | 100 | 100 |
| Component (B): hydrogenated SBR [*2] (part by mass) | - | - | - | - |
| Component (C): liquid polymer (part by mass) | | | | |
| polybutadiene B [*13] | 40 | - | - | - |
| polybutadiene C [*14] | - | 40 | 40 | - |
| styrene-butadiene copolymer [*17] | - | - | - | 40 |
| Aromatic oil [*18] (part by mass) | 40 | 40 | 40 | 40 |
| Carbon black A [*19] (part by mass) | 80 | 80 | - | 80 |
| Carbon black B [*23] (part by mass) | - | - | 80 | - |
| Stearic acid (part by mass) | 2 | 2 | 2 | 2 |
| Zinc oxide (part by mass) | 3 | 3 | 3 | 3 |
| Antioxidant [*20] (part by mass) | 1 | 1 | 1 | 1 |
| Vulcanization accelerator A[*21] (part by mass) | 0.4 | 0.4 | 0.4 | 0.4 |

(continued)

| Example<br>Comparative Example | 9 | 10 | 11 | 12 |
|---|---|---|---|---|
| Vulcanization accelerator B [*22] (part by mass) | 1 | 1 | 1 | 1 |
| Sulfur (part by mass) | 1.5 | 1.5 | 1.5 | 1.5 |
| Hysteresis loss | 100 | 100 | 100 | 100 |
| Road gripping property on dry roads | 100 | 100 | 100 | 100 |
| Road gripping property on wet roads | 100 | 100 | 100 | 100 |

[*23]: The outer surface area in accordance with the CTAB adsorption method: 140 $m^2/g$; 24M4 DBP absorption: 95 ml/100 g.

It is shown by the results in Tables 1 and 2 that the synergistic effect on the hysteresis loss property, the road gripping property on dry roads and the road gripping property on wet roads was exhibited by the combined use of the styrene-butadiene copolymer of component (A), the hydrogenated styrene-butadiene copolymer of component (B) and at least one substance selected from the resins and the liquid polymers of component (C).

Examples 25 to 32 and Comparative Example 13

In accordance with the same procedures as those conducted in Example 1 using a styrene-butadiene copolymer having a weight-average molecular weight of $1.0 \times 10^6$ as obtained in accordance with GPC and expressed as the value of the corresponding polystyrene, a content of the bound styrene of 30% by mass and a content of the vinyl unit of 50% in an amount of 100 parts by mass as copolymer (a) and 40 parts by mass of a liquid hydrogenated styrene-butadiene copolymer having a weight-average molecular weight of $1.0 \times 10^4$ as obtained in accordance with gel permeation chromatography and expressed as a value of corresponding polystyrene, a content of the bound styrene of 40% by mass and a fraction of hydrogenated double bond in the butadiene portion of 90% as hydrogenated copolymer (b), rubber compositions were prepared by mixing the components in accordance with the formulation 1 shown in Table 3, and rubber compositions containing various resins shown in Table 4 were obtained. The adhesion of the mixed rubber compositions to rolls was visually observed, and the processability in production plants was evaluated.

Table 3

| Mixing stage | Components of mixing | Formulation | |
|---|---|---|---|
| | | 1 | 2 |
| First stage | SBR #1500 | - | 100 |
| | styrene-butadiene copolymer rubber (a) | 100 | - |
| | hydrogenated styrene-butadiene copolymer rubber (b) | 80 | - |
| | aromatic oil | - | 80 |
| | SAF carbon black | 80 | 80 |
| | zinc oxide | 1.5 | 1.5 |
| | stearic acid | 2 | 2 |
| | antioxidant 6C [*20] | 1.5 | 1.5 |
| | paraffin wax | 1.5 | 1.5 |
| | resin (shown in Tables 4, 7 and 8) | 40 | 40 |
| Second stage | zinc oxide | 1.5 | 1.5 |
| | vulcanization accelerator DM [*22] | 1.5 | 1.5 |
| | vulcanization accelerator CZ[*24] | 2.5 | 2.5 |
| | sulfur | 1.5 | 1.5 |

[*24]: N-Cyclohexyl-2-benzothiazolylsulfenamide

Tires having a size of 315/40R18 were prepared using the above rubber compositions as the tread rubber, and the road gripping property was evaluated. The results of the evaluation are shown in Table 4. The results are expressed as indices based on the results of Comparative Example 13.

Table 4 - 1

| Example | | 25 | 26 | 27 |
|---|---|---|---|---|
| Comparative Example | 13 | | | |
| Petroleum resin (amount, part by mass) | - | 40 | 40 | 40 |
| Aromatic oil (part by mass) | 40 | - | - | - |
| Petroleum resin (type) | - | A [*9] | B [*25] | C [*26] |
| Softening point (°C) | - | 145 | 110 | 128 |
| Material monomer | - | $C_9$ | $C_9$ (α-methyl-styrene) | $C_9$ |
| Modifier | - | - | - | DCPD |
| Road gripping property | 100 | 115 | 116 | 118 |
| Processability in production plants | good | good | good | good |

Table 4 - 2

| Example | | | | | |
|---|---|---|---|---|---|
| Comparative Example | 28 | 29 | 30 | 31 | 32 |
| Petroleum resin (amount, part by mass) | 40 | 40 | 10 | 80 | 150 |
| Aromatic oil (part by mass) | - | - | - | - | - |
| Petroleum resin (type) | D [*27] | E [*28] | C | C | C |
| Softening point (°C) | 125 | 165 | 128 | 128 | 128 |
| Material monomer | $C_9$ | $C_9$ | $C_9$ | $C_9$ | $C_9$ |
| Modifier | phenol | maleic acid | DCPD | DCPD | DCPD |
| Road gripping property | 118 | 109 | 114 | 122 | 125 |
| Processability in production plants | good to fair | good | good | good | fair |

[*25]: B "W110"; manufactured by CRAY VALLEY Company.
[*26]: C "NEOPOLYMER 130S"; manufactured by SHIN NIPPON SEKIYU KAGAKU Co., Ltd.
[*27]: D "NEOPOLYMER E-130"; manufactured by SHIN NIPPON SEKIYU KAGAKU Co., Ltd.
[*28]: E "NEOPOLYMER 160"; manufactured by SHIN NIPPON SEKIYU KAGAKU Co., Ltd.

It is shown by the results in Table 4 that the road gripping property and the processability in production plants were improved by modifying the $C_9$-based petroleum resin. In particular, very excellent results were obtained in Example 27 in which the $C_9$-based petroleum resin modified with dicyclopentadiene was used.

Preparation Example 1 {Synthesis of styrene-butadiene copolymer rubber (a-1)]

Into a 5 liter autoclave equipped with stirrer wings and sufficiently purged with nitrogen gas, 3,000 g of cyclohexane, 12 g of tetrahydrofuran (THF), 200 g of 1,3-butadiene and 100 g of styrene were introduced, and the temperature inside the autoclave was adjusted at 21°C. To the resultant solution, 0.10 g of n-butyllithium was added. The polymerization was conducted for 60 minutes while the temperature was elevated, and it was confirmed that the conversion of the monomers was 99%. Then, 3.5 g of 2,6-di-t-butyl-p-cresol as the antioxidant was added. The values obtained by the analysis are shown in Table 5.

Preparation Examples 2 to 8 [Synthesis of styrene-butadiene copolymer rubbers (a-2) to (a-8)]

The synthesis was conducted in accordance with the same procedures as those conducted in Preparation Example 1 except that the ratio of the amounts of the monomers and the amount of the catalyst were changed. The values obtained by the analysis are shown in Table 5.

Table 5 - 1

| Preparation Example | 1 | 2 | 3 | 4 |
|---|---|---|---|---|
| Styrene-butadiene copolymer rubber (a) | a-1 | a-2 | a-3 | a-4 |
| Content of bound styrene (% by mass) | 33 | 5 | 33 | 20 |
| Content of vinyl unit (%) | 40 | 40 | 40 | 60 |
| Weight-average molecular weight ($\times 10^4$) | 70 | 70 | 31 | 105 |

Table 5 - 2

| Preparation Example | 5 | 6 | 7 | 8 |
|---|---|---|---|---|
| Styrene-butadiene copolymer rubber (a) | a-5 | a-6 | a-7 | a-8 |
| Content of bound styrene (% by mass) | 33 | 41 | 32 | 33 |
| Content of vinyl unit (%) | 80 | 35 | 41 | 30 |
| Weight-average molecular weight ($\times 10^4$) | 71 | 65 | 150 | 72 |

Preparation Example 9 [Synthesis of hydrogenated styrene-butadiene copolymer (b-1)]

Into a 5 liter autoclave equipped with stirrer wings and sufficiently purged with nitrogen gas, 3,000 g of cyclohexane, 12 g of tetrahydrofuran (THF), 150 g of 1,3-butadiene and 150 g of styrene were placed, and the temperature inside the autoclave was adjusted at 21°C. To the resultant solution, 1.50 g of n-butyllithium was added. The polymerization was conducted for 60 minutes while the temperature was elevated, and it was confirmed that the conversion of the monomers was 99%. After the polymerization was terminated by adding 4.68 g of tributylsilyl chloride, a catalyst solution which contained nickel naphthenate, triethylaluminum and butadiene in amounts such that the ratio of the amounts by mole was 1:3:3 and was prepared in advance was added in an amount such that the amount of nickel was 1 mole per 1,000 mole of the butadiene portion in the copolymer. Hydrogen was introduced into the reaction system under a hydrogen pressure of 30 atm, and the reaction was allowed to proceed at 80°C. The fraction of the hydrogenated unit was obtained by calculation from the decrease in the intensity of the spectrum of the unsaturated portion in the measurement of the 100 MHz proton NMR using carbon tetrachloride as the solvent at a concentration of 15% by mass. The result of the analysis is shown in Table 6.

Preparation Examples 10 to 15 [Synthesis of hydrogenated styrene-butadiene copolymers (b-2) to (b-7)]

The synthesis was conducted in accordance with the same procedures as those conducted in Preparation Example 9 except that the ratio of the amounts of the monomers, the amount of the catalyst and the pressure of hydrogen were changed. The results of the analysis are shown in Table 6.

Table 6 - 1

| Preparation Example | 9 | 10 | 11 | 12 |
|---|---|---|---|---|
| Styrene-butadiene copolymer rubber (a) | b-1 | b-2 | b-3 | b-4 |
| Content of bound styrene (% by mass) | 50 | 48 | 50 | 22 |
| Weight-average molecular weight ($\times 10^4$) | 1.5 | 1.6 | 0.3 | 1.5 |
| Fraction of hydrogenated double bond (%) | 85 | 40 | 70 | 83 |

Table 6-2

| Preparation Example | 13 | 14 | 15 |
|---|---|---|---|
| Styrene-butadiene copolymer rubber (a) | b-5 | b-6 | b-7 |
| Content of bound styrene (% by mass) | 33 | 50 | 48 |
| Weight-average molecular weight ($\times 10^4$) | 1.5 | 1.6 | 15 |
| Fraction of hydrogenated double bond (%) | 0 | 65 | 90 |

Rubber compositions were obtained by mixing the components in accordance with the formulation 1 shown above in Table 3 using styrene-butadiene copolymer rubbers (a) prepared in Preparation Examples 1 to 8 as the rubber component and hydrogenated styrene-butadiene copolymers (b) prepared in Preparation Examples 9 to 15. As the resin, the resin of the type C was used in all of the present Examples. The evaluations of the processability of the rubber compositions in production plants and the road gripping property of tires having a size of 315/40R18 and prepared by using the rubber compositions as the tread rubber were conducted in accordance with the same procedures as those conducted above. The results are shown in Table 7.

In the evaluation of the road gripping property, the results are expressed as indices based on the result of Comparative Example 14 used as the control.

Table 7 - 1

| Example Comparative Example | 33 | 34 | 35 | 36 | 37 | 38 |
|---|---|---|---|---|---|---|
| Petroleum resin (amount, part by mass) | 40 | 40 | 40 | 40 | 40 | 40 |
| Petroleum resin (type) *26 | C | C | C | C | C | C |
| Styrene-butadiene copolymer rubber (a) | a-1 | a-4 | a-7 | a-8 | a-1 | a-1 |
| Hydrogenated styrene-butadiene copolymer rubber (b) | b-1 | b-1 | b-1 | b-1 | b-6 | b-7 |
| Road gripping property | 115 | 113 | 112 | 110 | 110 | 113 |
| Processability in production plants | good to fair | good to fair | good to fair | good to fair | good to fair | good to fair |

Table 7-2

| Example Comparative Example | 14 | 15 | 16 | 17 | 18 |
|---|---|---|---|---|---|
| Petroleum resin (amount, part by mass) | - | 40 | 40 | 40 | 40 |
| Aromatic oil (parts by mass) | 40 | - | - | - | - |
| Petroleum resin (type) *26 | - | C | C | C | C |
| Styrene-butadiene copolymer rubber (a) | a-1 | a-2 | a-3 | a-1 | a-1 |
| Hydrogenated styrene-butadiene copolymer rubber (b) | b-1 | b-1 | b-1 | b-2 | b-4 |
| Road gripping property | 100 | 95 | 103 | 105 | 101 |
| Processability in production plants | good to fair | fair | fair | fair | air |

Table 7 - 3

| Example Comparative Example | 19 | 20 | 21 | 22 |
|---|---|---|---|---|
| Petroleum resin (amount, part by mass) | 40 | 40 | 40 | 40 |
| Aromatic oil (parts by mass) | - | - | - | - |
| Petroleum resin (type) *26 | C | C | C | C |
| Styrene-butadiene copolymer rubber (a) | a-1 | a-5 | a-6 | a-1 |
| Hydrogenated styrene-butadiene copolymer rubber (b) | b-5 | b-1 | b-1 | b-3 |
| Road gripping property | 104 | 105 | 105 | 103 |
| Processability in production plants | fair | fair | fair | air |

It is shown by the results in Table 7 that Examples gave more excellent results than those of Comparative Examples with respect to both of the road gripping property and the processability in production plants. In particular, remarkably more excellent results were obtained in Examples 33, 34, 35, 36, 37 and 38 in which styrene-butadiene copolymer rubbers (a) having a weight-average molecular weight in the range of $7.01 \times 10^5$ to $2.5 \times 10^6$, a content of the bound styrene of 10 to 50% by mass and a content of the vinyl unit in the butadiene portion of 20 to 70% and hydrogenated styrene-butadiene copolymers (b-1), (b-6) and (b-7) which satisfied the requirements for hydrogenated styrene-butadiene copolymer (b) were used.

Comparative Example 23

A rubber composition was obtained by mixing the components in accordance with formulation 2 shown in Table 3 using SBR #1500 obtained by the emulsion polymerization and a phenol resin as component (C).

INDUSTRIAL APPLICABILITY

The rubber composition of the present invention exhibits the decreased dependence on temperature and the excellent road gripping property when the rubber composition is used for a tire even when the temperature at the surface of the tread is low. The road gripping property and the processability in production plants are simultaneously improved by using the hydrogenated styrene-butadiene copolymer and, as component (C), the modified $C_9$·based petroleum resin and the terpene-phenol resin.

**Claims**

1. A rubber composition for tires which comprises 100 parts by mass of (A) copolymer (a) which is a styrene-butadiene copolymer having a weight-average molecular weight of $4.0 \times 10^5$ to $3.0 \times 10^6$, as obtained in accordance with gel permeation chromatography and expressed as a value of corresponding polystyrene, a content of bound styrene St(a) of 10 to 50% by mass and a content of a vinyl unit in a butadiene portion of 20 to 70%; and 10 to 200 parts by mass of (B) copolymer (b) which is a hydrogenated styrene-butadiene copolymer having a weight-average molecular weight of $5.0 \times 10^3$ to $2.0 \times 10^6$, as obtained in accordance with gel permeation chromatography and expressed as a value of corresponding polystyrene, a content of bound styrene St(b) which is in a range of 25 to 70% by mass and satisfies a relation expressed by equation (I) and a fraction of hydrogenated double bond in the butadiene portion of 60% or greater; **characterized by** comprising (C) at least one substance selected from C9-based petroleum resins modified with a compound selected from unsaturated alicyclic compounds, compounds having hydroxyl group and unsaturated carboxylic acid compounds, providing tackiness to the rubber composition, and liquid polymers having a weight-average molecular weight of 1,000 to 50,000, equation (I) being:

$$St(b) \geqq St(a) + 10 \qquad \cdots (I)$$

2. A rubber composition for tires according to Claim 1, wherein the content of bound styrene St(b) in component (B) is 30 to 60% by mass.

3. A rubber composition for tires according to any one of Claims 1 and 2, wherein the fraction of hydrogenated double bond in the butadiene portion is 80% or greater.

4. A rubber composition for tires according to any one of Claims 1 to 3, wherein an amount of component (B) is 20 to 100 parts by mass per 100 parts by mass of component (A).

5. A rubber composition for tires according to any one of Claims 1 to 4, wherein

$$St(b) \geqq St(a) + 15 \qquad \cdots (I)$$

6. A rubber composition for tires according to Claim 8 1, wherein the $C_9$-based petroleum resin is modified with an unsaturated alicyclic compound.

7. A rubber composition for tires according to Claim 6 wherein the unsaturated alicyclic compound is dicyclopentadiene.

8. A rubber composition for tires according to Claim 1, wherein the $C_9$-based petroleum resin is modified with a compound having hydroxyl group.

**9.** A rubber composition for tires according to claim 8, wherein the compound having hydroxyl group is a phenol-based compound.

**10.** A rubber composition for tires according to Claim 1, wherein the $C_9$-based petroleum resin is modified with an unsaturated carboxylic acid compound.

**11.** A rubber composition for tires according to Claim 10, wherein the unsaturated carboxylic acid compound is maleic acid.

**12.** A rubber composition for tires according to any one of Claims 1 to 11, wherein the $C_9$-based petroleum resin has a softening point of 200°C or lower.

**13.** A rubber composition for tires according to any one of Claims 1 to 12, wherein an amount of component (C) is 10 to 150 parts by mass per 100 parts by mass of a rubber component.

**14.** A rubber composition for tires according to any one of Claims 1 to 13, which further comprises a filler.

**15.** A rubber composition for tires according to Claim 14, wherein the filler is at least one filler selected from carbon black, silica and inorganic compounds represented by following formula (II):

$$mM_1 \cdot xSiOy.zH_2O \qquad (II)$$

wherein $M_1$ represents at least one metal, metal oxide, metal hydroxide, hydrate of the metal, the metal oxide or the metal hydroxide or metal carbonate, the metal being selected from Al, Mg, Ti, Ca and Zr, and m, x, y and z represent an integer of 1 to 5, an integer of 0 to 10, an integer of 2 to 5 and an integer of 0 to 10, respectively.

**16.** A tire which uses a rubber composition for tires described in any one of Claims 1 to 15.

**Patentansprüche**

**1.** Kautschukzusammensetzung für Reifen, die Folgendes umfasst: 100 Massenteile (A) Copolymer (a), das ein Styrol-Butadien-Copolymer ist, das ein gewichtsdurchschnittliches Molekulargewicht von 4,0 x $10^5$ bis 3,0 x $10^6$, wie es der Gelpermeationschromatographie gemäß erhalten und als entsprechender Polystyrolwert ausgedrückt wird, einen Gehalt an gebundenem Styrol St(a) von 10 bis 50 Massen-% und einen Gehalt an einer Vinyleinheit in einem Butadienanteil von 20 bis 70% aufweist; und 10 bis 200 Massenteile (B) Copolymer (b), das ein hydriertes Styrol-Butadien-Copolymer ist, das ein gewichtsdurchschnittliches Molekulargewicht von 5,0 x $10^3$ bis 2,0 x $10^5$, wie es der Gelpermeationschromatographie gemäß erhalten und als entsprechender Polystyrolwert ausgedrückt wird, einen Gehalt an gebundenem Styrol St(h), der im Bereich von 25 bis 70 Massen-% liegt und einem durch die Gleichung (I) ausgedrückten Verhältnis entspricht, und eine Fraktion von hydrierter Doppelbindung in dem Butadienanteil von 60 % oder mehr aufweist; **dadurch gekennzeichnet, dass** sie (C) mindestens eine Substanz umfasst ausgewählt unter Erdölharzen auf $C_9$-Basis, die mit einer Verbindung modifiziert sind ausgewählt unter ungesättigten alicyclischen Verbindungen, Verbindungen, die eine Hydroxylgruppe aufweisen, und ungesättigten Carbonsäureverbindungen, die der Kautschukzusammensetzung Klebrigkeit verleihen, und flüssigen Polymeren, die ein gewichtsdurchschnittliches Molekulargewicht von 1.000 bis 50.000 aufweisen, wobei die Gleichung (I):

$$St(b) \geq St(a) + 10 \qquad (I)$$

lautet.

**2.** Kautschukzusammensetzung für Reifen nach Anspruch 1, wobei der Gehalt an gebundenem Styrol St(b) in Komponente (B) 30 bis 60 Massen-% beträgt.

**3.** Kautschukzusammensetzung für Reifen nach einem der Ansprüche 1 und 2, wobei die Fraktion von hydrierter Doppelbindung in dem Butadienanteil 80 % oder mehr beträgt.

4.  Kautschukzusammensetzung für Reifen nach einem der Ansprüche 1 bis 3, wobei eine Menge der Komponente (B) 20 bis 100 Massenteile pro 100 Massenteile der Komponente (A) beträgt.

5.  Kautschukzusammensetzung für Reifen nach einem der Ansprüche 1 bis 4, wobei die Gleichung (I)

$$St(b) \geq St(a) + 15 \qquad (I)$$

lautet.

6.  Kautschukzusammensetzung für Reifen nach Anspruch 1, wobei das Erdölharz auf $C_9$-Basis mit einer ungesättigten alicyclischen Verbindung modifiziert ist.

7.  Kautschukzusammensetzung für Reifen nach Anspruch 6, wobei die ungesättigte alicyclische Verbindung Dicyclopentadien ist.

8.  Kautschukzusammensetzung für Reifen nach Anspruch 1, wobei das Erdölharz auf $C_9$-Basis mit einer Verbindung, die eine Hydroxylgruppe aufweist, modifiziert ist.

9.  Kautschukzusammensetzung für Reifen nach Anspruch 8, wobei die Verbindung, die eine Hydroxylgruppe aufweist, eine Verbindung auf Phenolbasis ist.

10. Kautschukzusammensetzung für Reifen nach Anspruch 1, wobei das Erdölharz auf $C_9$-Basis mit einer ungesättigten Carbonsäureverbindung modifiziert ist.

11. Kautschukzusammensetzung für Reifen nach Anspruch 10, wobei die ungesättigte Carbonsäureverbindung Maleinsäure ist.

12. Kautschukzusammensetzung für Reifen nach einem der Ansprüche 1 bis 11, wobei das Erdölharz auf $C_9$-Basis einen Erweichungspunkt von 200 °C oder weniger aufweist.

13. Kautschukzusammensetzung für Reifen nach einem der Ansprüche 1 bis 12, wobei eine Menge der Komponente (C) 10 bis 150 Massenteile pro 100 Massenteile einer Kautschukkomponente beträgt.

14. Kautschukzusammensetzung für Reifen nach einem der Ansprüche 1 bis 13, die des Weiteren einen Füllstoff umfasst.

15. Kautschukzusammensetzung für Reifen nach Anspruch 14, wobei der Füllstoff mindestens ein Füllstoff ist ausgewählt unter Ruß, Siliciumdioxid und anorganischen Verbindungen, die durch die folgende Formel (II)

$$mM_1 \cdot xSiOy.zH_2O \qquad (II)$$

dargestellt sind, wobei $M_1$ mindestens ein Metall, Metalloxid, Metallhydroxid, Hydrat des Metalls, des Metalloxids oder des Metallhydroxids oder Metallcarbonat darstellt, wobei das Metall unter Al, Mg, Ti, Ca und Zr ausgewählt wird, und m, x, y und z jeweils eine ganze Zahl von 1 bis 5, eine ganze Zahl von 0 bis 10, eine ganze Zahl von 2 bis 5 und eine ganze Zahl von 0 bis 10 darstellen.

16. Reifen, bei dem eine Kautschukzusammensetzung für Reifen, wie in einem der Ansprüche 1 bis 15 beschrieben, verwendet wird.

**Revendications**

1.  Composition de caoutchouc pour pneus, qui comprend 100 parties en masse de (A) un copolymère (a) qui est un copolymère styrène-butadiène ayant un poids moléculaire moyen en poids de $4,0 \times 10^5$ à $3,0 \times 10^6$, tel qu'obtenu par chromatographie par perméation de gel et exprimé en valeur de polystyrène correspondant, une teneur en styrène lié St(a) de 10 à 50% en masse et une teneur en unité vinyle dans une partie butadiène de 20 à 70 %; et 10 à 200 parties en masse de (B) un copolymère (b) qui est un copolymère styrène-butadiène hydrogéné ayant un poids moléculaire moyen en poids de $5{,}0 \times 10^3$ à $2{,}0 \times 10^5$, tel qu'obtenu par chromatographie par perméation de gel et exprimé en valeur de polystyrène correspondant, une teneur en styrène lié St(b) qui est située dans une gamme de 25 à 70% en masse et satisfait à une relation exprimée par l'équation (I) et une fraction de liaison double hydrogénée dans la partie butadiène de 60 % ou plus; **caractérisée en ce qu'**elle comprend (C) au moins une substance choisie parmi les résines de pétrole à base de $C_9$ modifiées avec un composé choisi parmi les composés alicycliques insaturés, les composés ayant un groupe hydroxyle et les composés d'acides carboxyliques insaturés, procurant du collant à la composition de caoutchouc, et les polymères liquides ayant un poids moléculaire moyen en poids de 1000 à 50000, l'équation (I) étant:

$$St(b) \geq St(a) + 10 \qquad (I)$$

2. Composition de caoutchouc pour pneus selon la revendication 1, dans laquelle la teneur en styrène lié St(b) dans le constituant (B) est de 30 à 60% en masse.

3. Composition de caoutchouc pour pneus selon l'une quelconque des revendications 1 et 2, dans laquelle la fraction de liaison double hydrogénée dans la partie butadiène est de 80% ou plus.

4. Composition de caoutchouc pour pneus selon l'une quelconque des revendications 1 à 3, dans laquelle une quantité de constituant (B) est de 20 à 100 parties en masse pour 100 parties en masse de constituant (A).

5. Composition de caoutchouc pour pneus selon l'une quelconque des revendications 1 à 4, dans laquelle l'équation (I) est:

$$St(b) \geq St(a) + 15 \qquad (I)$$

6. Composition de caoutchouc pour pneus selon la revendication 1, dans laquelle la résine de pétrole à base de $C_9$ est modifiée avec un composé alicyclique insaturé.

7. Composition de caoutchouc pour pneus selon la revendication 6, dans laquelle le composé alicyclique insaturé est le dicyclopentadiène.

8. Composition de caoutchouc pour pneus selon la revendication 1, dans laquelle la résine de pétrole à base de $C_9$ est modifiée avec un composé ayant un groupe hydroxyle.

9. Composition de caoutchouc pour pneus selon la revendication 8, dans laquelle le composé ayant un groupe hydroxyle est un composé à base de phénol.

10. Composition de caoutchouc pour pneus selon la revendication 1, dans laquelle la résine de pétrole à base de $C_9$ est modifiée avec un composé d'acide carboxylique insaturé.

11. Composition de caoutchouc pour pneus selon la revendication 10, dans laquelle le composé d'acide carboxylique insaturé est l'acide maléique.

12. Composition de caoutchouc pour pneus selon l'une quelconque des revendications 1 à 11, dans laquelle la résine de pétrole à base de $C_9$ a un point de ramollissement de 200°C ou moins.

13. Composition de caoutchouc pour pneus selon l'une quelconque des revendications 1 à 12, dans laquelle une quantité de constituant (C) est de 10 à 150 parties en masse pour 100 parties en masse d'un constituant de caoutchouc.

14. Composition de caoutchouc pour pneus selon l'une quelconque des revendications 1 à 13, qui comprend en outre une charge.

15. Composition de caoutchouc pour pneus selon la revendication 14, dans laquelle la charge est au moins une charge choisie parmi le noir de carbone, la silice et les composés inorganiques représentés par la formule (II) suivante:

$$mM_1 \cdot xSiOy.zH_2O \qquad (II)$$

dans laquelle $M_1$ représente au moins un métal, un oxyde de métal, un hydroxyde de métal, un hydrate du métal, de l'oxyde de métal ou de l'hydroxyde de métal ou un carbonate de métal, le métal étant choisi parmi Al, Mg, Ti, Ca et Zr, et m, x, y et z représentent un entier de 1 à 5, un entier de 0 à 10, un entier de 2 à 5 et un entier de 0 à 10, respectivement.

16. Pneu qui utilise une composition de caoutchouc pour pneus décrite dans l'une quelconque des revendications 1 à 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000129037 B
- JP HEISEI51993214170 B
- JP HEISEI61994200078 B
- JP HEISEI91997328577 B
- EP 1035164 A
- JP 2002155165 B
- JP 11130909 B
- JP 5214170 B